# EUROPEAN PATENT APPLICATION

(11) **EP 1 050 207 A2**
(43) Date of publication of application: **08.11.2000**
(21) Application number: 00650048.2
(22) Date of filing: 08.05.2000
(51) Int. Cl.: A01F 15/07

(54) **A bale wrapping apparatus**

(30) Priority: 07.05.1999 IE 990373; 24.09.1999 IE 990796
(71) Applicant: Agri Patents Limited, County Clare (IE)
(72) Inventor: O'Connor, Enda, County Clare (IE)
(74) Representative: Weldon, Michael James

(57) **Abstract**

A bale wrapper (1) has a table (5) with four belts (31) providing a flexible bale-supporting platform. A drive roller (26) for the belts (31) is free to move laterally under action of a damper (29) to accommodate changing orientation of a square bale (B) in an optimum well-balanced manner. The belts (31) are also trained around lower rollers (24). Initial separation of the upper rollers (26) may be pre-set using an adjustment spindle (30) for optimum effective table width.

## Description

The invention relates to a bale wrapping apparatus, capable of handling non-round bales, typically referred to as "square" bales.

One of the major problems which arises with wrapping of bales is the complexity of the movement of the bale during the wrapping operation. The wrapping apparatus must control movement in three dimensions to ensure that the bale is comprehensively wrapped. Lack of control in even a small way can cause major problems in the wrapping quality and may result in re-work and wasted material.

A key requirement is that the weight of the bale is distributed so that the centre of gravity is maintained as close as possible to the central vertical axis of the table.

One approach, referred to in the industry as the "rock and roll" approach is described in European Patent Specification No. EP543792 (Tellefsdal A/S). In this arrangement, there are two rollers on each side of the table. Each pair of rollers is mounted on an L-shaped bracket, which is pivotally connected to the table. The rollers directly contact the bale and the orientations of the L-shaped brackets change as the rollers rotate the bale to maintain balance and weight distribution.

It is an object of the invention to provide a bale wrapping apparatus which provides improved control of square bale weight distribution and movement.

According to the invention, there is provided a bale wrapping apparatus comprising a wrapping table for supporting and rotating square bales, and a wrapping film dispenser, characterised in that,
the wrapping table comprises:-
a table frame,
laterally spaced-apart rollers, and at least one belt wound around the rollers to provide a flexible bale-supporting platform between the rollers,
a drive means for rotating the rollers so that they in turn rotate the belt to provide a moving platform, and
a roller support means supporting a roller to allow it to move laterally so that the belt accommodates orientation of a bale in use.

In one embodiment, the roller support means comprises a roller support frame pivotally connected to the table frame and a damping means for damping movement of the roller support frame with respect to the table frame.

In another embodiment, the wrapping table comprises at least three belts.

In one embodiment, the wrapping table comprises two spaced-apart pairs of rollers, each pair comprising a lower roller and an upper roller, and the bale-supporting platform provided by the belt is between the upper rollers.

In one embodiment, the drive means comprises a drive chain driving the lower rollers and the lower rollers in turn drive the upper rollers.

In another embodiment, the lower rollers drive the upper rollers via drive chains.

In one embodiment, the wrapping table comprises means for pre-setting the distance between the rollers to pre-set the effective table width.

In a further embodiment, the apparatus further comprises a bale loader comprising:-
a base pivotally connected to the frame for movement between a ground-level bale-picking position and a bale-placing position over the belt,
spaced-apart arms extending from the base, and
a drive means to rotate at least one of the arms between an outer position and a bale-gripping position to pick a bale.

In the latter embodiment, the rotatable arm may comprise a bale-engaging foot pivotally connected to the arm for movement between a splayed-out position and an in-line position when contacting a bale.

In a further embodiment, the apparatus further comprises a bale dispensing curved plate pivotally connected to the frame for dispensing a wrapped bale onto the ground.

The invention will be more clearly understood from the following description of some embodiments thereof, given by way of example only with reference to the accompanying drawings in which:-
Fig. 1 is a perspective view from above of a bale wrapping apparatus;
Fig. 2 is a perspective view showing parts of a table;
Fig 3 is a diagrammatic view showing the manner in which belts are driven;
Fig. 4 is a plan view of part of the table;
Figs. 5 and 6 are diagrammatic views showing support of rollers on each side of the table, and Figs. 7 and 8 are corresponding side views, and
Figs. 9 to 14 are diagrammatic views showing how a bale is handled by the apparatus.

Referring to the drawings, there is shown a bale wrapping apparatus 1 (or "bale wrapper"). The wrapper 1 has a chassis 2 with a coupler 3 for connection to a tractor. The wrapper 1 also comprises a film dispenser 4, a wrapping table 5, a bale loader 6, and a curved bale dispensing plate 7.

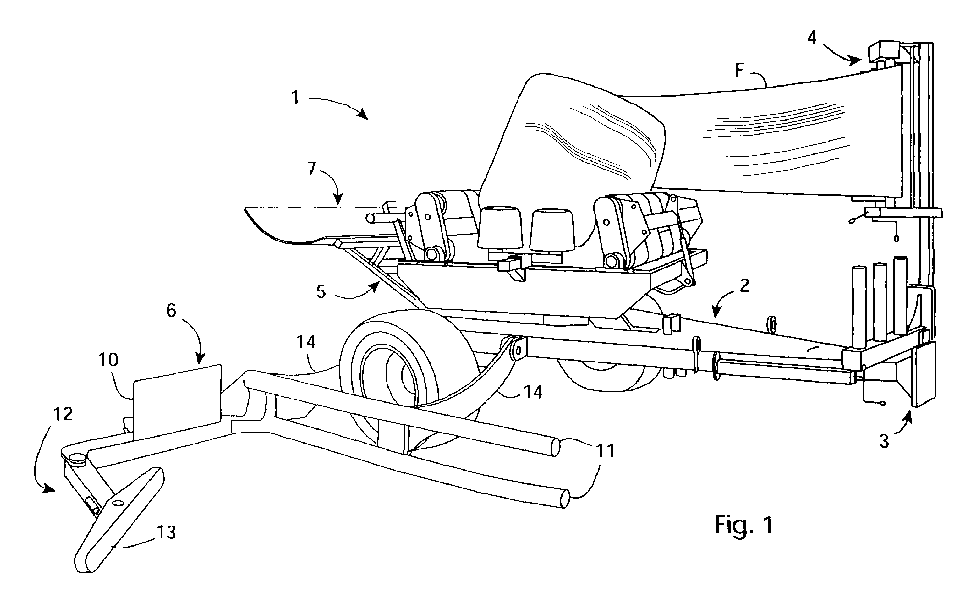

The bale loader 6 is shown most clearly in Fig. 1. A base 10 supports a pair of inner parallel curved arms 11 and an outer rotatable arm 12 driven to rotate in a "crab claw" like manner by an hydraulic ram in the base 10. A foot 13 is connected to the arm 12 by a pivot pin and is biassed to a splayed-out position by a spring. The base 10 is connected to the table 5 by a pair of curved connecting arms 14.

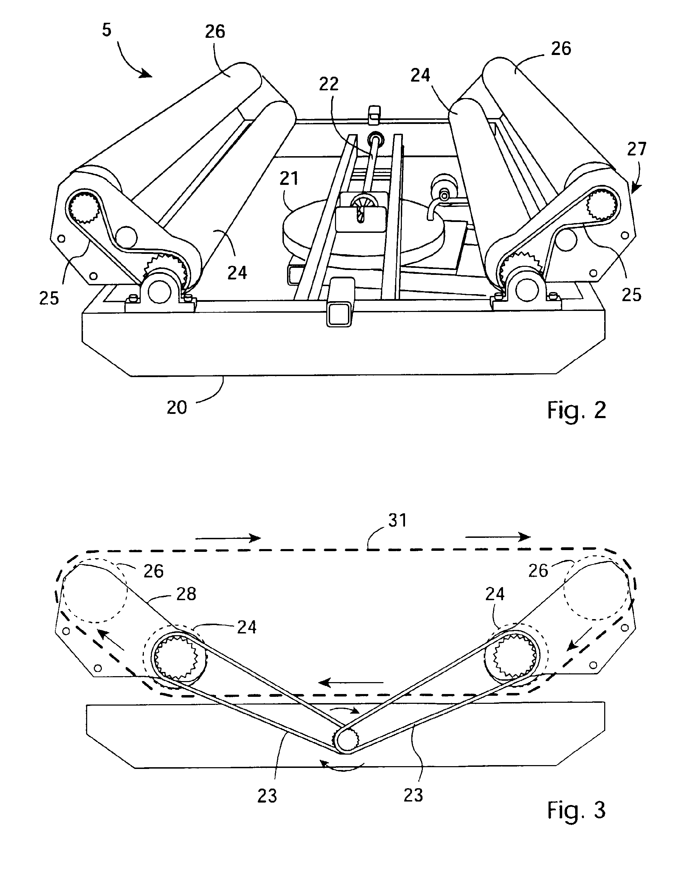

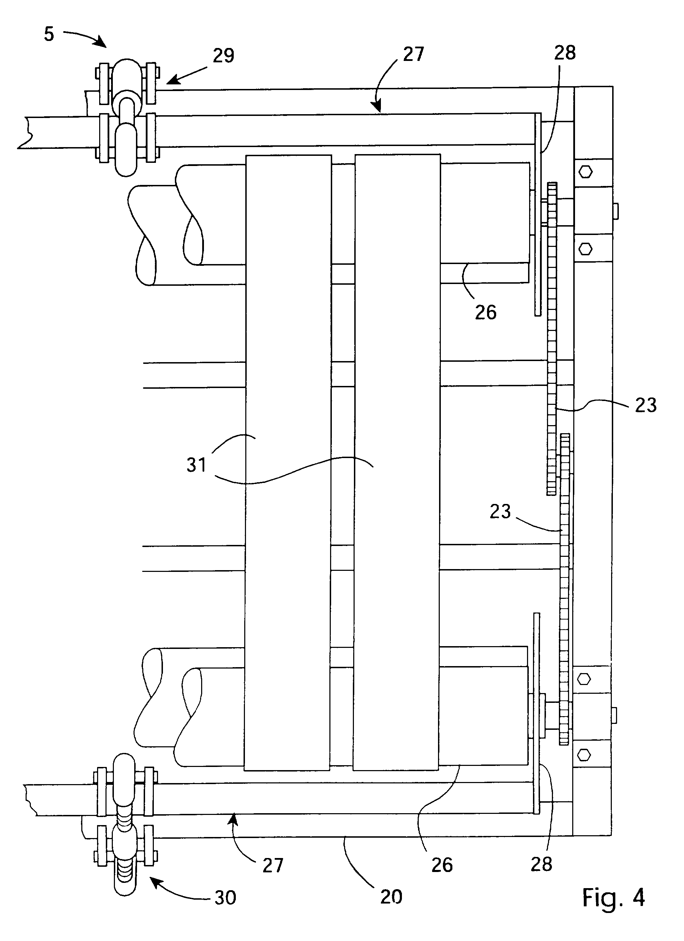

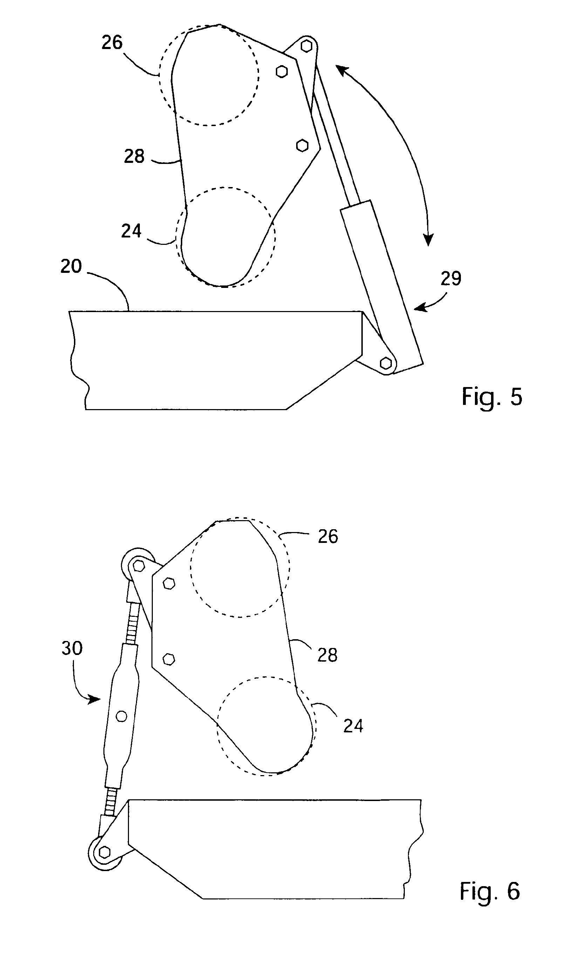

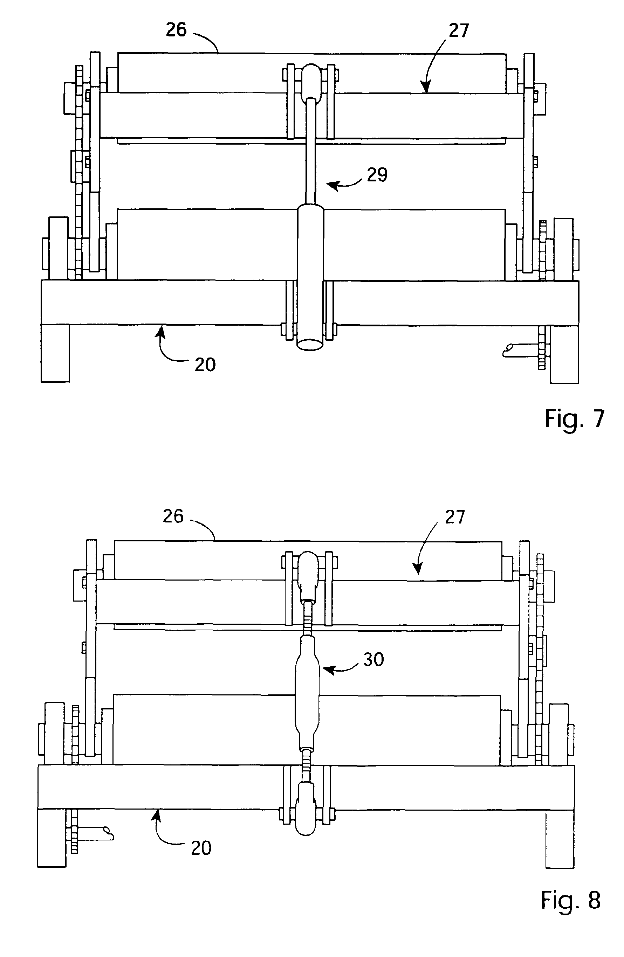

Referring to Figs. 2 to 8, the table 5 comprises a generally rectangular support frame 20 mounted on the chassis 2 by a rotational coupler 21. The frame 20 supports a drive shaft 22 having a PTO coupling for receiving power from a tractor PTO. The shaft 22 drives two chains 23 which rotate two lower rollers 24. At the opposite end, the rollers 24 drive chains 25 which in turn drive upper rollers 26.

The pairs of rollers 24 and 26 are spaced apart across the table 5. The upper roller 26 of each pair is mounted on a roller frame 27 comprising end brackets 28, pivotally connected to the table frame 20 about the same axis as the lower rollers 24. One frame 27 is free to pivot in an action which has the effect of laterally moving the roller 26. This movement is damped by a damping gas ram 29 connected between the roller frame 27 and the table frame 20. The other roller frame 27 is not free to rotate about the table frame 20 in use, however, it may be rotated initially under action of a pre-setting spindle 30 to pre-set the initial separation of the upper rollers 26.

Finally, the table 5 comprises four flexible rubber belts 31 wound around the rollers 24 and 26. Pre-setting the position of an upper roller 26 using the pre-setting spindle 30 pre-sets the effective width of the table 5 because the bale-supporting platform is provided by the four belts 31 running between the upper rollers 26.

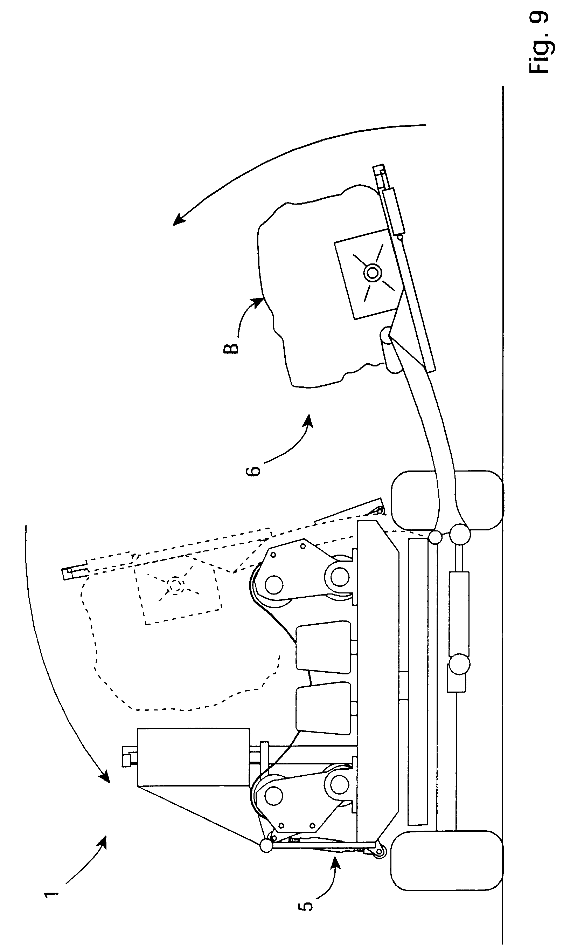

As shown in Fig. 9, the wrapper 1 is hauled by a tractor to a location at which the bale loader 6 is operated to pick a bale B. This is performed by the outer arm 12 moving inwardly to clamp the bale B against the fixed guides 11. During this action the foot 13 is moved against spring bias from its splayed-out position to an in-line position in contact with the bale B. The loader 6 is then rotated to an upper position at which the arm 12 is released so that it places the bale B onto the table 5.

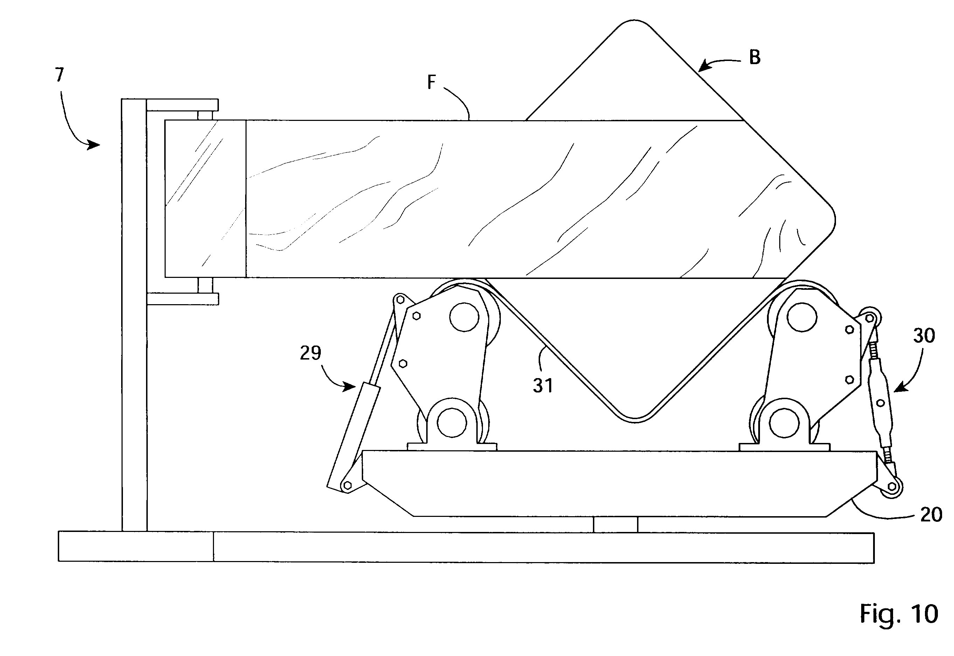

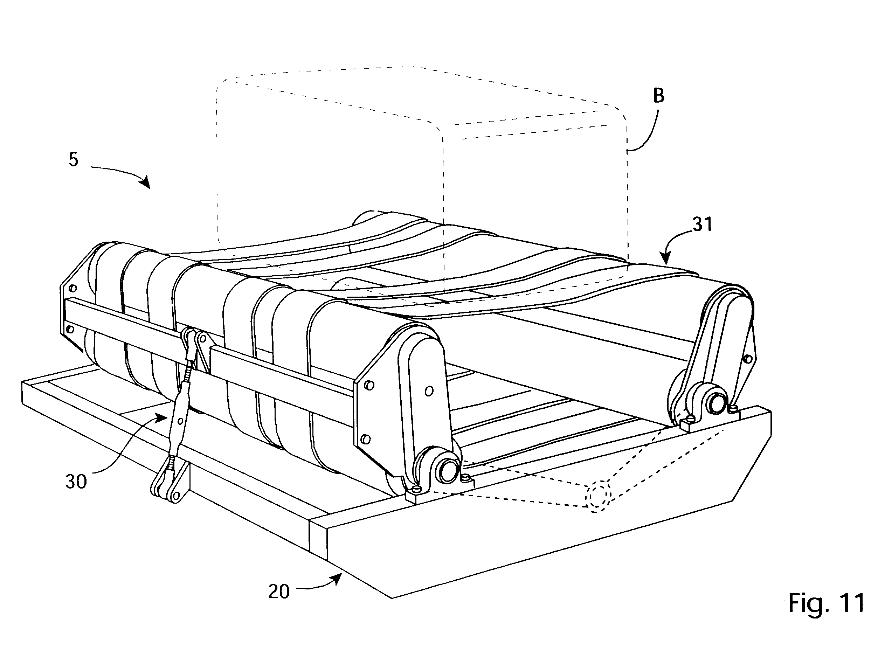

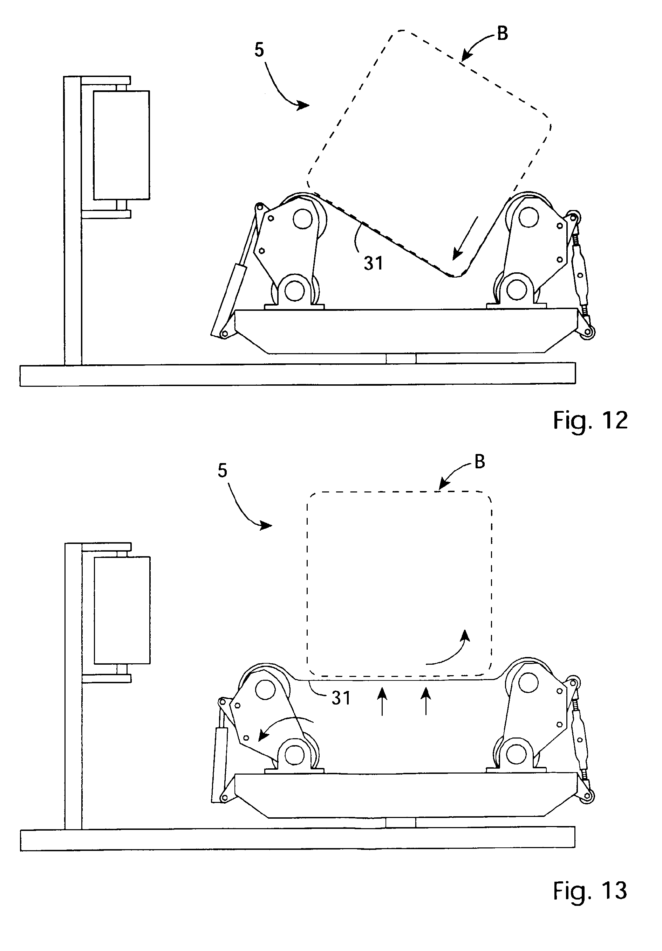

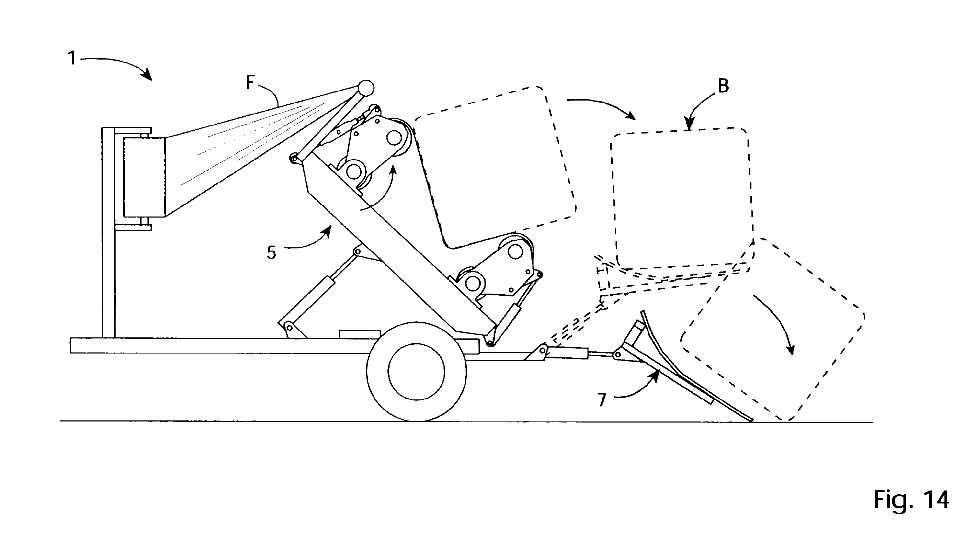

As shown in Fig. 10 wrapping film F is connected and the bale B is rotated in a three-dimensional manner by rotation of the wrapping table 5 with respect to the chassis and movement of the belts 31 dynamically. The upper roller 26 which is free to move laterally does so in a manner which accommodates the orientation of the bale B, as shown in Figs. 10 to 13. It will be appreciated that there is at all times maximum contact area between the bale B and the belts 31 so that orientation of the bale B is accommodated in an optimum and well-balanced manner. When the bale B is orientated with one side substantially horizontal the belts 30 are also substantially horizontal. When a corner is in the central area of the table the belt is urged downwardly under the greater pressure and the roller 26 moves laterally inwardly. Unwanted lateral movement of the roller 26 is prevented by action of the damping gas ram 29, while at the same time this ram allows sufficient freedom of movement. This freedom of movement is also important for dispensing a bale, as shown in Fig. 14. The balance is contributed to by pre-setting the effective width of the table 5 by initial adjustment of the adjustment spindle 30.

When wrapping is finished, the table 5 is tilted so that the bale B is delivered onto the curved dispensing plate 7, and the plate 7 is lowered to gently dispense the wrapped bale onto the ground. This action is particularly smooth and damage to the wrapping film is very unlikely.

It will be appreciated that the wrapper 1 performs a complete cycle of loading, wrapping, and dispensing in a very simple, reliable and effective manner without the need for additional equipment such as a loading vehicle. During wrapping, the bale B is supported whereby the orientation of the bale is continually accommodated in an optimum balanced manner without the need for sensing and control devices. All that is required of the user is that the table is pre-set to the optimum width. Another important advantage is that the wrapper may be used just as effectively for "round" bales.

The invention is not limited to the embodiments described, but may be varied in construction and detail within the scope of the claims.

## Claims

1. A bale wrapping apparatus comprising a wrapping table for supporting and rotating square bales, and a wrapping film dispenser, characterised in that,
the wrapping table (5) comprises:-
a table frame (20),
laterally spaced-apart rollers (26), and at least one belt (31) wound around the rollers (26) to provide a flexible bale-supporting platform between the rollers (26),
a drive means (22, 23, 25) for rotating the rollers (26) so that they in turn rotate the belt (31) to provide a moving platform, and
a roller support means (27, 29) supporting a roller (26) to allow it to move laterally so that the belt (31) accommodates orientation of a bale (B) in use.

2. A bale wrapping apparatus as claimed in claim 1, wherein the roller support means comprises a roller support frame (27) pivotally connected to the table frame (20) and a damping means (29) for damping pivoting movement of the roller support frame with respect to the table frame.

3. A bale wrapping apparatus as claimed in claim 1 or 2, wherein the wrapping table (5) comprises at least three belts (31).

4. A bale wrapping apparatus as claimed in any preceding claim, wherein the wrapping table (5) comprises two spaced-apart pairs of rollers, each pair comprising a lower roller (24) and an upper roller (26), and the bale-supporting platform provided by the belt is between the upper rollers.

5. A bale wrapping apparatus as claimed in claim 4, wherein the drive means comprises a drive chain (22, 23) driving the lower rollers (24) and the lower rollers (24) in turn drive the upper rollers (26).

6. A bale wrapping apparatus as claimed in claim 5, wherein the lower rollers (24) drive the upper rollers (26) via drive chains (25).

7. A bale wrapping apparatus as claimed in any preceding claim, wherein the wrapping table (5) comprises means (30) for pre-setting the distance between the rollers (26) to pre-set the effective table width.

8. A bale wrapping apparatus as claimed in any preceding claim, wherein the apparatus further comprises a bale loader (6) comprising:-
a base (10) pivotally connected to the frame (20) for movement between a ground-level bale-picking position and a bale-placing position over the belt (31),
spaced-apart arms (11, 12) extending from the base (10), and
a drive means to rotate at least one of the arms (12) between an outer position and a bale-gripping position to pick a base.

9. A bale wrapping apparatus as claimed in claim 8, wherein the rotatable arm (12) comprises a bale-engaging foot (13) pivotally connected to the arm (12) for movement between a splayed-out position and an in-line position when contacting a bale (B).

10. A bale wrapping apparatus as claimed in any preceding claim, wherein the apparatus further comprises a bale dispensing curved plate (7) pivotally connected to the frame (20) for dispensing a wrapped bale onto the ground.
